# FASCICULE DE BREVET EUROPEEN

(11) **EP 3 714 740 B1**
(45) Date de publication et mention de la délivrance du brevet: **16.06.2021**
(21) Numéro de dépôt: 20163349.2
(22) Date de dépôt: 16.03.2020
(51) Int. Cl.: A47J 31/20

(54) **APPAREIL DE PRÉPARATION D'UNE BOISSON INFUSÉE ÉQUIPÉ D'UN DISPOSITIF DE DÉPLACEMENT D'UN PANIER A INFUSION AVEC UN SYSTÈME MÉCANIQUE DE RAPPEL DU PANIER**
GERÄT ZUR ZUBEREITUNG EINES AUFGUSSGETRÄNKS MIT EINER VORRICHTUNG ZUR VERSCHIEBUNG DES AUFGUSSSIEBS UND EINEM MECHANISCHEN SYSTEM ZUM RÜCKHOLEN DES SIEBS
APPLIANCE FOR PREPARING A BREWED BEVERAGE PROVIDED WITH A DEVICE FOR MOVING A BREWING BASKET WITH A MECHANICAL BASKET RETURN SYSTEM

(30) Priorité: 29.03.2019 FR 1903309
(43) Date de publication de la demande: 30.09.2020
(73) Titulaire: SEB S.A., 69130 Ecully (FR)
(72) Inventeur: MANSEAU, Charles, 21000 DIJON (FR); DUMOUX, Philippe, 21120 GEMEAUX (FR)
(74) Mandataire: SEB Développement

(56) Documents cités:
- WO-A1-2008/049163
- US-A1- 2013 055 901
- US-B1- 6 915 733

## Description

### Domaine technique

La présente invention concerne les appareils de préparation d'une boisson infusée qui comportent un panier à infusion pouvant contenir une substance à infuser, notamment du thé, et être déplacé dans de l'eau chaude afin d'infuser ladite substance grâce à un dispositif de déplacement dudit panier à infusion d'une position extraite de l'eau chaude, où il s'égoutte, à une position immergée dans l'eau chaude, où la substance infuse et inversement.

L'invention porte tout particulièrement sur la conception du dispositif de déplacement du panier à infusion.

### Etat de la technique

Les appareils de préparation d'une boisson infusée sont connus de l'homme du métier. Un tel appareil comprend un corps destiné à recevoir de l'eau. Cette eau peut être préalablement chauffée puis versée dans le corps, selon certains types d'appareil. D'autres types d'appareil peuvent comprendre un dispositif de chauffe de l'eau disposée dans le corps, de l'eau froide étant alors versée dans le corps puis chauffée directement dans celui-ci.

Une boisson infusée se prépare au moyen d'une substance à infuser, par exemple du thé, cette substance étant insérée dans un panier à infusion qui est immergé dans de l'eau chaude pendant une durée adaptée à ladite substance à infuser. Le panier à infusion comporte une paroi filtrante qui laisse pénétrer l'eau chaude dans ledit panier afin que la substance à infuser baigne dans cette eau chaude, ce qui permet l'infusion de ladite substance à infuser, l'eau infusée pouvant passer au travers de la paroi filtrante pour se mélanger au reste de l'eau chaude présente dans le corps de l'appareil.

Certains appareils comportent un panier à infusion qui doit être inséré manuellement par une ouverture supérieure sur le corps de l'appareil afin de l'immerger dans l'eau chaude. Une fois la durée d'infusion atteinte, le panier à infusion doit être extrait de l'appareil par l'ouverture supérieure du corps, ce qui nécessite de maintenir en suspension un certain temps le panier à infusion au-dessus de l'eau infusée au niveau de l'ouverture supérieure avant de l'extraire complètement du corps, afin de laisser le temps à la substance infusée contenue dans le panier à infusion de s'égoutter un minimum. Le panier à infusion doit ensuite être placé dans un récipient, par exemple une coupelle ou une assiette, afin que la substance infusée contenu dans ledit panier à infusion puisse finir de s'égoutter sans s'étaler sur la table ou le plan de cuisine recevant l'appareil.

Pour éviter cette manipulation du panier à infusion durant l'égouttage de la substance infusée, ainsi que l'utilisation d'un récipient additionnel recevant ledit panier à infusion après cet égouttage, certains appareils comportent un dispositif de déplacement du panier à infusion qui permet de maintenir ledit panier à infusion et de le déplacer entre deux positions, à savoir une position basse d'infusion dans laquelle le panier à infusion est immergé dans l'eau chaude et une position haute d'égouttage dans laquelle le panier à infusion est positionné au-dessus du niveau d'eau infusée. De tels appareils sont notamment illustrés dans les demandes de brevet ou brevets publiés sous les numéros US5609092A, US6915733B1, WO2008137133A1 et EP3076830B1.

Selon le brevet américain US5609092A, le dispositif de déplacement comporte un lien de transmission flexible qui passe par une ouverture supérieure du corps de l'appareil et qui comprend une première extrémité reliée au panier à infusion logé dans le corps et une deuxième extrémité agencée à l'extérieur du corps, sur une poignée fixée audit corps, ladite deuxième extrémité étant assujettie à un organe de manœuvre accessible depuis l'extérieur de la poignée et déplaçable manuellement en hauteur le long de celle-ci. Le déplacement de l'organe de manœuvre vers le haut de la poignée permet à celui-ci de pousser sur la deuxième extrémité du lien, ce qui permet de descendre le panier à infusion pour le plonger dans la position basse d'infusion. Inversement, le déplacement de l'organe de manœuvre vers le bas de la poignée permet à celui-ci de tirer la deuxième extrémité du lien, ce qui permet de monter le panier à infusion pour l'extraire de l'eau infusée dans la position haute d'égouttage. Le panier à infusion est guidé le long de la paroi interne du corps attenante à la poignée, durant ses déplacements entre la position basse d'infusion et la position haute d'égouttage et inversement.

Selon le brevet américain US6915733B1, le dispositif de déplacement comporte un élément de transmission rigide en forme de U inversé qui passe par une ouverture supérieure du corps et qui comprend une première extrémité reliée au panier à infusion et une deuxième extrémité agencée à l'extérieur du corps. Cette deuxième extrémité est assujettie à un piston qui peut être actionné en montée et descente grâce à deux valves, ledit actionnement du piston permettant de déplacer le panier à infusion entre la position basse d'infusion et la position haute d'égouttage dans le corps, et réciproquement, par l'intermédiaire dudit élément de transmission rigide en forme de U inversé.

Selon la demande internationale de brevet WO2008137133A1, l'appareil comprend un corps muni d'une poignée et un couvercle permettant la fermeture d'une ouverture supérieure sur le corps, le couvercle étant articulé sur le corps au niveau de l'extrémité supérieure de la poignée. Ce couvercle comporte un logement interne permettant la réception du panier à infusion configuré à cet effet, ce logement interne communiquant avec l'ouverture supérieure du corps en position fermée du couvercle. Le dispositif de déplacement comporte un câble qui passe dans la poignée et dans le couvercle, le câble comprenant une première extrémité placée dans le couvercle et reliée au panier à infusion et une deuxième extrémité placée dans la poignée et reliée à un système motorisé d'entraînement logé dans la poignée. Ce système motorisé d'entraînement comporte une vis d'entraînement s'étendant dans le sens de la hauteur dans la poignée et un écrou monté sur la vis d'entraînement et relié à la deuxième extrémité du câble, la rotation de la vis dans un sens et dans l'autre permettant de déplacer l'écrou le long de la vis d'entraînement, de haut en bas et inversement. Le déplacement de l'écrou vers le haut permet à celui-ci de remonter la deuxième extrémité du câble, lui donnant ainsi du mou afin de laisser descendre par gravité le panier à infusion dans le corps en passant par son ouverture supérieure, le panier à infusion pouvant ainsi se déplacer vers la position basse d'infusion. Inversement, le déplacement de l'écrou vers le bas permet à celui-ci de tirer la deuxième extrémité du câble, ce qui permet audit câble de tirer sur le panier à infusion pour l'extraire de l'eau infusée et le repositionner dans le logement interne du couvercle, en position haute d'égouttage.

Selon le brevet européen EP3076830B1 l'appareil comprend un corps muni d'une poignée et un couvercle permettant la fermeture d'une ouverture supérieure sur le corps, le couvercle étant articulé sur le corps au moyen d'une charnière agencée au niveau de l'extrémité supérieure de la poignée. Ce couvercle permet le maintien du panier à infusion au niveau de l'ouverture supérieure du corps, en position fermée du couvercle. Le dispositif de déplacement comporte un câble qui est logé dans le couvercle, le câble comprenant une première extrémité reliée au panier à infusion et une deuxième extrémité reliée à un système motorisé d'entraînement logé dans le couvercle. Ce système motorisé d'entraînement comporte un arbre entraîné en rotation et relié à la deuxième extrémité du câble, la rotation de l'arbre dans un sens et dans l'autre permettant d'enrouler le câble autour de l'arbre et inversement de le dérouler. Le déroulement du câble permet de lui donner du mou et de laisser descendre par gravité le panier à infusion dans le corps en passant par son ouverture supérieure, le panier à infusion pouvant ainsi se déplacer vers la position basse d'infusion. Inversement, l'enroulement du câble permet de tirer le panier à infusion pour l'extraire de l'eau infusée dans la position haute d'égouttage selon laquelle ledit panier à infusion vient en position d'arrêt sur le couvercle.

Ces mises en oeuvre avec un lien de transmission flexible ou un câble telles qu'apparaissant dans les titres US5609092A, WO2008137133A1 et EP3076830B1 présentent des inconvénients, en particulier celui de ne pas maîtriser parfaitement la descente du panier à infusion vers sa position basse d'infusion. En effet, en début de descente du panier à infusion dans l'eau chaude contenue dans le corps, le panier à infusion peut flotter pendant un certain temps du fait que l'eau chaude doit s'infiltrer par la paroi filtrante du panier à infusion et imbiber la substance à infuser, en particulier si l'organe de manœuvre décrit dans US5609092A ou si le système motorisé décrit dans WO2008137133A1 et EP3076830B1 est actionné trop rapidement. Dans le cas de l'organe de manœuvre décrit dans US5609092A et du système motorisé décrit dans WO2008137133A1, la poussée sur la deuxième extrémité du lien de transmission flexible ou du câble a pour incidence de plier celui-ci dans les cas où le panier à infusion tend à flotter ou ne s'enfonce pas assez rapidement dans l'eau ; cela peut avoir pour incidence de sortir de sa trajectoire normale le lien de transmission flexible ou le câble, lequel pouvant alors se bloquer sur une pièce du dispositif de déplacement ou sur une autre pièce de l'appareil. Il en est de même dans le cas du système motorisé décrit dans EP3076830B1, le câble pouvant aussi se plier durant son déroulement lorsque le panier à infusion flotte ou ne s'enfonce pas assez rapidement, le câble pouvant alors aussi se détendre et sortir de sa trajectoire normale, risquant alors de rester bloqué sur une pièce du système motorisé d'entraînement ou sur une pièce du couvercle.

### Exposé de l'invention

L'invention pallie l'inconvénient précité et met en œuvre, à cet effet, un appareil de préparation de boissons infusées tel que défini dans la revendication 1. Ainsi, contrairement à la mise en œuvre décrite dans US5609092A qui ne prévoit aucun système mécanique de rappel du panier à infusion, voire à celle décrite dans WO2008137133A1, le dispositif de déplacement de l'appareil selon l'invention permet de forcer la descente du panier à infusion dès que le système motorisé d'entraînement donne du mou à l'élément de transmission flexible, ce qui permet de maintenir tendu en permanence ledit élément de transmission flexible qui ne peut donc pas sortir de sa trajectoire normale durant la descente du panier dans le corps de la position haute d'égouttage vers la position basse d'infusion.

Selon une réalisation de l'appareil, le système mécanique de rappel du panier à infusion en position basse d'infusion comporte au moins un ressort. De préférence, ce ressort est agencé pour travailler en compression de sorte à pousser le panier vers la position basse d'infusion. En variante, ce ressort pourrait être agencé pour travailler en traction de sorte à tirer le panier vers la position basse d'infusion. D'autres variantes sont aussi envisageables en remplaçant le ressort par tout autre organe élastique adapté.

Selon cette réalisation précitée de l'appareil, le système mécanique de rappel du panier à infusion en position basse d'infusion comporte au moins une colonne de guidage en translation dudit panier à infusion, l'au moins une colonne de guidage comportant un logement de réception de l'au moins un ressort. Ainsi, les déplacements du panier à infusion dans le corps s'effectuent selon une trajectoire définie par la colonne de guidage, le logement assurant en outre un maintien du ressort monté en compression.

De préférence, la première extrémité de l'élément de transmission flexible est attachée à un chariot qui coopère avec l'au moins une colonne de guidage, le panier à infusion étant agencé sur le chariot.

De préférence, le panier à infusion est agencé de manière démontable sur le chariot pour faciliter le retrait de la substance infusée, le nettoyage du panier à infusion et l'insertion d'une substance à infuser dans le panier à infusion.

De préférence, le corps comporte une paroi munie d'une poignée. En outre, le système motorisé d'entrainement de la deuxième extrémité de l'élément de transmission flexible est agencé dans ladite poignée.

Selon une réalisation de l'appareil, le système motorisé comporte une vis entrainée en rotation par un moteur et un écrou monté sur la vis, la deuxième extrémité de l'élément de transmission flexible étant reliée à l'écrou. La rotation de la vis permet de déplacer l'écrou le long de celle-ci et, ainsi, la deuxième extrémité de l'élément de transmission flexible.

Selon une réalisation de l'appareil, l'élément de transmission flexible est du type ruban et présente une section rectangulaire aplatie.

D'autres éléments de transmission flexibles peuvent être envisagés, par exemple un câble. Au sens de l'invention, on entend par « élément de transmission flexible » le fait que l'élément de transmission est souple pour pouvoir être plié et changer de trajectoire, mais non élastique de sorte à ne pas se déformer sous l'effet de la tension exercée sous l'action dudit système motorisé d'entraînement et dudit système mécanique de rappel.

De préférence, l'élément de transmission flexible est réalisé en une matière plastique, d'autres matières étant envisageables.

Selon une réalisation de l'appareil, le dispositif de déplacement comporte une pièce de guidage de l'élément de transmission flexible agencée sur un bord supérieur du corps. Cette pièce de guidage permet de se prémunir contre tout risque éventuel de sortie de trajectoire de l'élément de transmission flexible lorsque celui-ci est poussé vers le haut par le système motorisé d'entraînement.

Selon une réalisation, l'appareil comporte des moyens de chauffe de l'eau contenue dans le corps et un circuit de commande des moyens de chauffe et du système motorisé d'entrainement de la deuxième extrémité de l'élément de transmission flexible.

### Brève description des figures

Les caractéristiques et avantages de l'invention apparaîtront à la lecture de la description suivante s'appuyant sur des figures, parmi lesquelles :
[Fig. 1] La figure 1 est une vue d'ensemble d'un appareil de préparation de boissons infusées selon l'invention ;
[Fig. 2] La figure 2 est une vue en coupe montrant le panier à infusion en position basse d'infusion dans le corps de l'appareil ;
[Fig. 3] La figure 3 est une vue en coupe montrant le panier à infusion en position haute d'égouttage dans le corps de l'appareil ;
[Fig. 4] La figure 4 est une vue en coupe montrant notamment le système mécanique de rappel et le système motorisé d'entraînement, avec le panier à infusion en position basse d'infusion ;
[Fig. 5] La figure 5 est une vue en coupe montrant notamment le système mécanique de rappel et le système motorisé d'entraînement, avec le panier à infusion en position haute d'égouttage ;
[Fig. 6] La figure 6 montre en coupe partielle la colonne de guidage du chariot recevant le panier à infusion et la pièce de guidage de l'élément de transmission flexible ;
[Fig. 7] La figure 7 montre le système motorisé d'entraînement dans la position basse d'infusion du panier à infusion ;
[Fig. 8] La figure 8 montre le système motorisé d'entraînement dans la position haute d'égouttage du panier à infusion ;
[Fig. 9] La figure 9 montre plus en détail l'élément de transmission flexible agencé entre l'écrou du système motorisé d'entraînement et le chariot recevant le panier à infusion ;
[Fig. 10] La figure 10 montre le chariot destiné à recevoir de manière amovible le panier à infusion ;
[Fig. 11] La figure 11 montre le panier à infusion destiné à être monté de manière amovible sur le chariot de la figure 10 ;
[Fig. 12] La figure 12 montre notamment la vis d'entraînement du système motorisé d'entraînement ;
[Fig. 13] La figure 13 schématise un dispositif d'assemblage amovible du panier à infusion à l'intérieur du corps, du type magnétique.

### Description détaillée de l'invention

Dans la suite de la description, le terme appareil est utilisé pour désigner l'appareil de préparation de boissons infusées, le terme lien est utilisé pour désigner l'élément de transmission flexible et le terme panier est utilisé pour désigner le panier à infusion. En outre, les mêmes références sont utilisées pour désigner les caractéristiques identiques ou équivalentes sur l'appareil, sauf indication dans le texte.

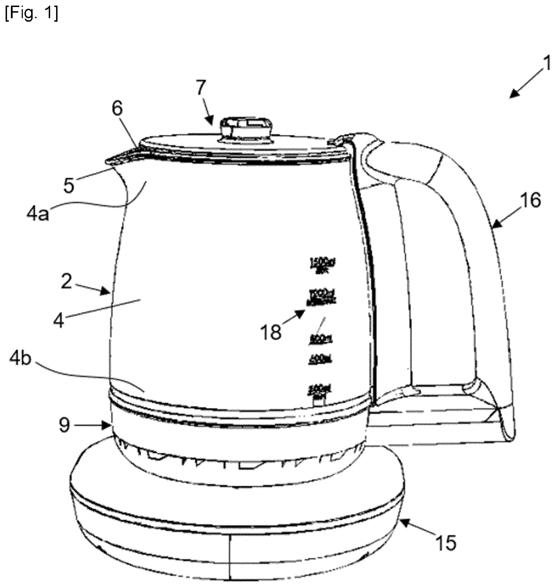

En regard des figures 1 à 3, l'appareil 1 se présente comme une bouilloire électrique, avec un corps 2 définissant une chambre 3 qui permet de contenir de l'eau. Le corps 2 comprend une paroi périphérique 4 qui comporte dans sa partie supérieure 4a un bec verseur 5. Le corps 2 comprend une ouverture supérieure 6 qui communique avec la chambre 3. L'appareil 1 comprend un couvercle 7 qui permet de fermer l'ouverture supérieure 6 du corps 2 ; selon deux variantes possibles de l'appareil 1, ce couvercle 7 peut être indépendant du corps 2 de sorte à pouvoir le dégager complètement ou, au contraire, articulé vis-à-vis dudit corps 2 de sorte à le conserver à demeure sur celui-ci et permettre uniquement l'accès à l'ouverture supérieure dudit corps 2. L'appareil 1 comprend une plaque chauffante 8 qui constitue un fond de la chambre 3, la plaque chauffante 8 étant montée de manière étanche vis-à-vis du corps 2 grâce à un boitier 9 monté sur la partie inférieure 4b de la paroi périphérique 4 dudit corps 2. Ce boîtier 9 permet notamment d'y loger une résistance chauffante 10 fixée sous la plaque chauffante 8, un circuit de commande 11 et un capteur de température 12 fixé également sous la plaque chauffante 8. Ce boîtier 9 comprend un fond 13 au niveau duquel est agencé un connecteur électrique femelle 14 qui est raccordé au circuit de commande 11 et permet sa connexion électrique à une base 15 qui comprend un connecteur électrique mâle (non illustré) complémentaire audit connecteur électrique femelle 14. Cette base 15 peut être raccordée électriquement à une source électrique externe par le biais d'une prise de courant (non illustrée). L'appareil 1 comprend aussi une poignée 16 qui s'étend le long de la paroi périphérique 4 du corps 2, du côté opposé à celui du bec verseur 5. L'homme du métier pourra s'inspirer des bouilloires électriques existantes pour la mise en œuvre des caractéristiques techniques précitées.

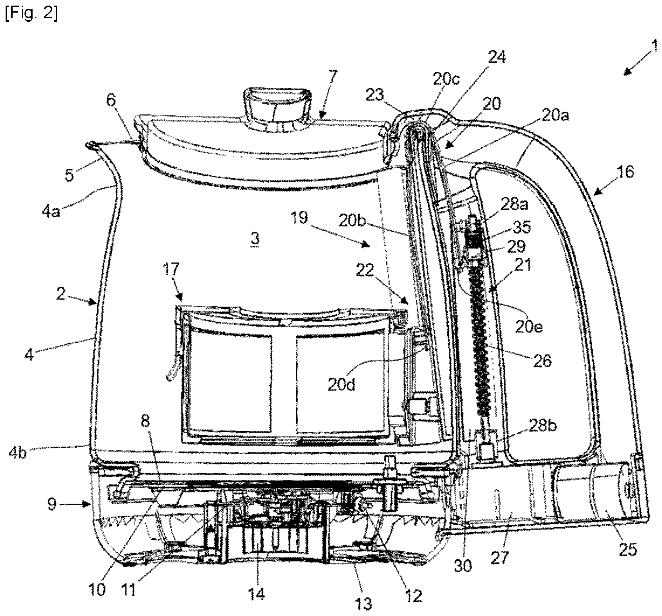

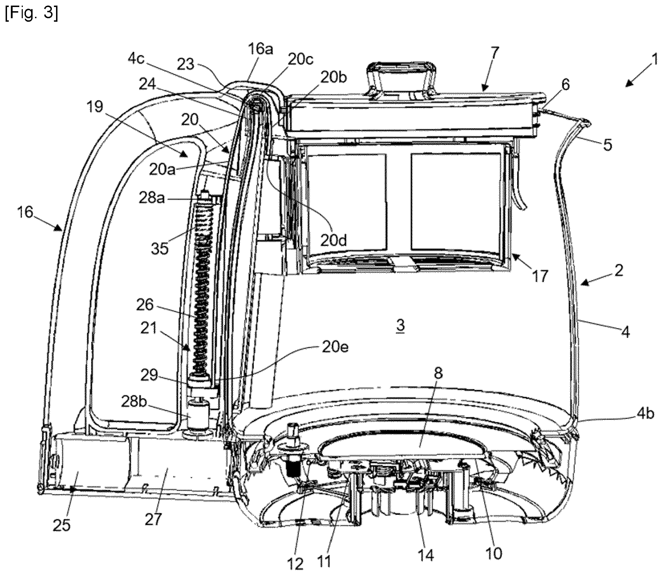

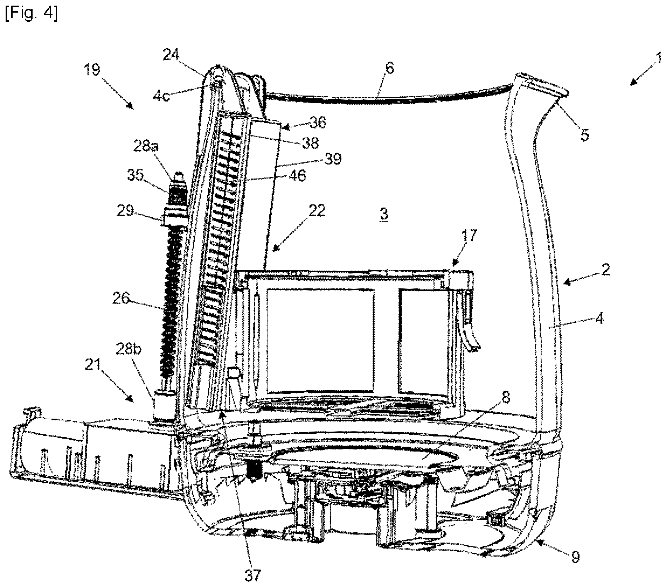

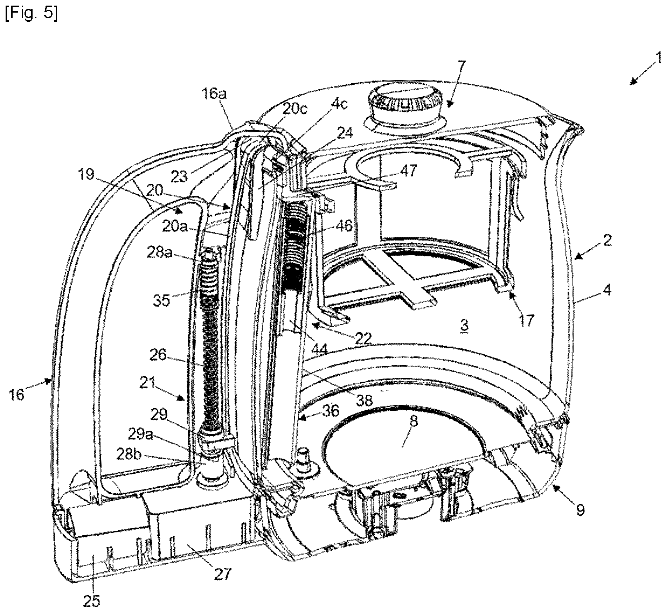

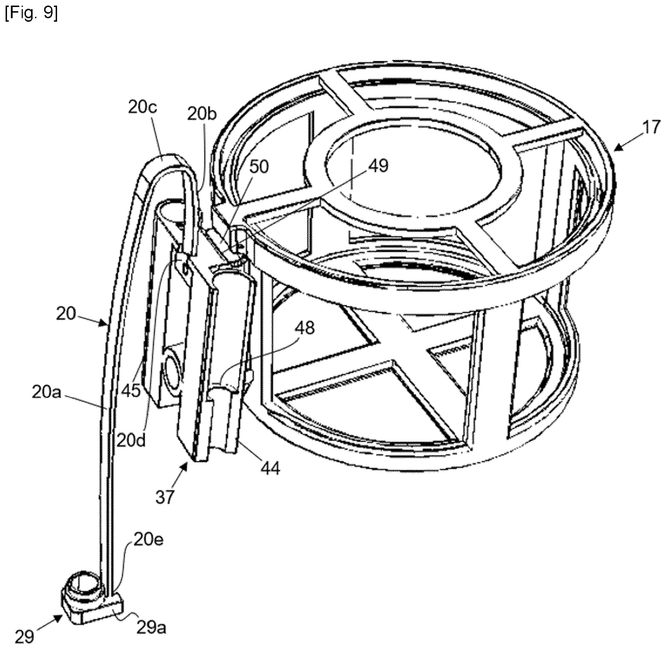

L'appareil 1 comprend un panier 17 qui peut se déplacer à l'intérieur de la chambre 3 du corps 2 entre une position basse d'infusion illustrée en figures 2 et 4, selon laquelle le panier 17 sera plongé dans de l'eau contenue dans la chambre 3 et qui aura été chauffée au préalable par la plaque chauffante 8, et une position haute d'égouttage illustrée en figures 3 et 5, selon laquelle le panier 17 sera disposé au-dessus du niveau de l'eau infusée contenue dans ladite chambre 3. De préférence, la paroi périphérique 4 du corps 2 comportera un système de graduations 18, illustré en figure 1, qui permettra de préconiser une quantité d'eau minimale et maximale à verser dans la chambre 3 pour s'assurer que le panier 17 plonge correctement dans l'eau durant la réalisation de la boisson infusée puis sorte correctement de l'eau infusée pour son égouttage. Les déplacements du panier 17 dans la chambre 3 sont réalisés au moyen d'un dispositif de déplacement 19 qui comporte un lien 20, un système motorisé d'entrainement 21 agissant sur le lien 20 et un système mécanique de rappel 22 agissant sur le panier 17 pour le ramener dans la position basse d'infusion, tel que l'illustrent notamment les figures 2 à 5. En regard notamment des figures 5 et 9, le lien 20 présente la forme d'un ruban ayant une section rectangulaire aplatie et il est de préférence réalisé dans une matière plastique, ce qui lui donne de la souplesse permettant de le plier tout en empêchant son allongement sous l'effet d'un effort de traction exercé dans un sens ou dans l'autre par le système motorisé d'entraînement 21 et par le système mécanique de rappel 22.

En regard des figures 2 et 3, la partie supérieure 16a de la poignée 16 communique avec l'ouverture supérieure 6 du corps 2, grâce à un passage 23 agencé entre la poignée 16 et le corps 2. Ce passage 23 permet de loger une première portion 20a du lien 20 dans la poignée 16 et de loger une seconde portion 20b du lien 20 dans le corps 2, en passant ledit lien 20 au travers dudit passage 23. La souplesse du lien 20 permet de le courber en forme de U inversé, sa portion courbée 20c prenant appui sur une pièce de guidage 24 illustrée plus en détail en figures 4, 5 et 6 qui permet de guider ledit lien 20 durant ses déplacements d'un côté et de l'autre du passage 23 lors des déplacements du panier 17 vers la position basse d'infusion ou la position haute d'égouttage. La pièce de guidage 24 est courbée en forme de U inversé et prend appui sur un bord supérieur 4c de la paroi périphérique 4 attenant à la poignée 16. La matière plastique utilisée pour le lien 20, par exemple du polyamide, réduit les frottements de celui-ci sur la pièce de guidage 24 durant ses déplacements.

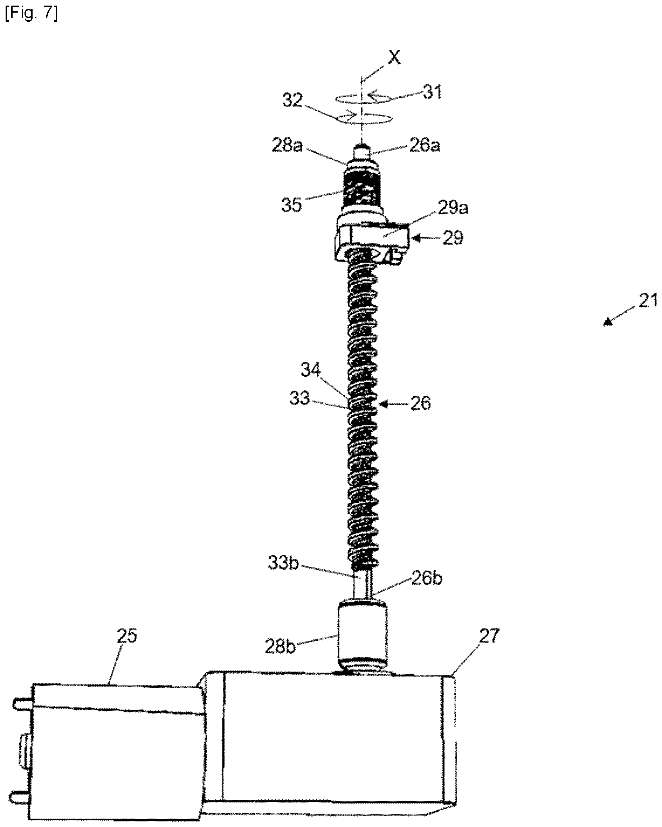

En regard notamment des figures 7 à 9, le système motorisé d'entraînement 21 comprend un moteur 25 qui entraîne une vis 26 par le biais d'un boîtier de transmission 27. Les portions d'extrémité supérieure 26a et inférieure 26b de cette vis 26 sont montées en liaison pivot d'axe X dans la poignée 16 par l'intermédiaire de deux paliers de roulement supérieur 28a et inférieur 28b, ce qui permet la rotation de la vis 26 selon son axe X qui s'étend plus ou moins verticalement le long de la poignée 16. Cette vis 26 reçoit un écrou 29 qui comprend une face latérale plane 29a venant en appui contre une plaque d'arrêt 30 (illustrée figure 2) agencée longitudinalement à l'intérieur de la poignée dans le sens de la vis 26 ; cette plaque d'arrêt 30 bloque la rotation de l'écrou 29 autour de l'axe X de la vis 26, ce qui permet la translation de cet écrou 29 le long de l'axe X sous la rotation de la vis 26. La rotation de la vis 26 dans le sens de la flèche 31 permet la descente de l'écrou 29 dans la poignée 16 jusqu'à ce que ledit écrou 29 atteigne la position basse sur ladite vis 26, telle qu'illustrée en figures 3, 5 et 8. Inversement, la rotation de la vis 26 dans le sens de la flèche 32 permet la montée de l'écrou 29 dans la poignée 16 jusqu'à ce que ledit écrou 29 atteigne la position haute sur ladite vis 26, telle qu'illustrée en figures 2, 4 et 7.

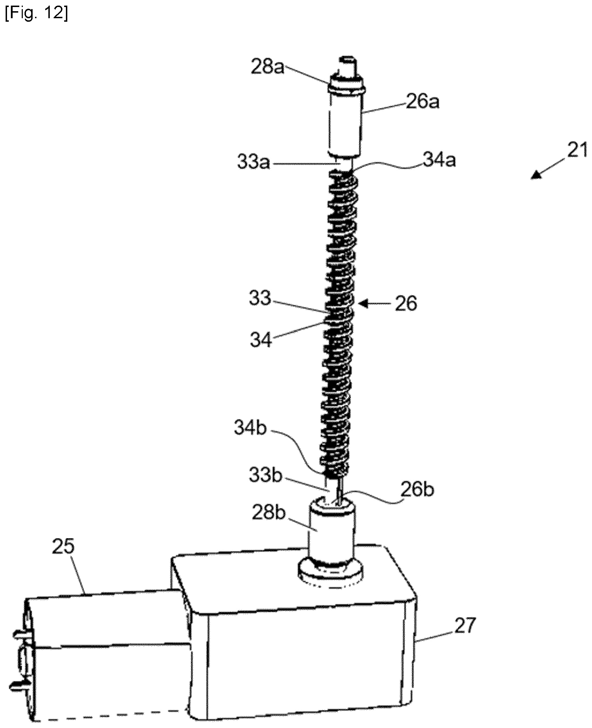

En regard de la figure 12, la vis 26 comprend une tige filetée 33 qui comporte une portion d'extrémité supérieure 33a, une portion d'extrémité inférieure 33b et un filet 34 qui s'étend entre lesdites portions d'extrémité supérieure 33a et inférieure 33b. En d'autres termes, les extrémités supérieure 34a et inférieure 34b du filet 34 s'arrêtent au niveau des portions d'extrémité supérieure 33a et inférieure 33b de la tige filetée 33. L'écrou 29 comprend un taraudage (non illustré) qui est embrayé (en prise) avec le filet 34 de la tige filetée 33 durant les déplacements dudit écrou 29 le long de la vis 26. Les portions d'extrémité supérieure 33a et inférieure 33b de la tige filetée 33 présentent un diamètre qui est inférieur à celui du filet du taraudage (non illustré) de l'écrou 29, ce qui permet à l'écrou 29 de venir se positionner librement dans ces portions d'extrémité supérieure 33a et inférieure 33b de la tige filetée 33 sans venir en butée contre celles-ci lorsque ledit écrou 29 atteint les extrémités supérieure 34a et inférieure 34b du filet 34. Lorsque l'écrou 29 atteint la position haute sur ladite vis 26 telle qu'illustrée en figures 2, 4 et 7, ledit écrou 29 atteint la portion d'extrémité supérieure 33a de la tige filetée 33, position selon laquelle le taraudage de l'écrou 29 débraye de (n'est plus en prise avec) l'extrémité supérieure 34a du filet 34 de la tige filetée 33, ce qui arrête le déplacement vers le haut de l'écrou 29, malgré la rotation de la vis 26 dans le sens de la flèche 32. De même, lorsque l'écrou 29 atteint la position basse sur ladite vis 26 telle qu'illustrée en figures 3, 5 et 8, ledit écrou 29 atteint la portion d'extrémité inférieure 33b de la tige filetée 33, position selon laquelle le taraudage de l'écrou 29 débraye de (n'est plus en prise avec) l'extrémité inférieure 34b du filet 34 de la tige filetée 33, ce qui arrête le déplacement vers le bas de l'écrou 29, malgré la rotation de la vis 26 dans le sens de la flèche 31.

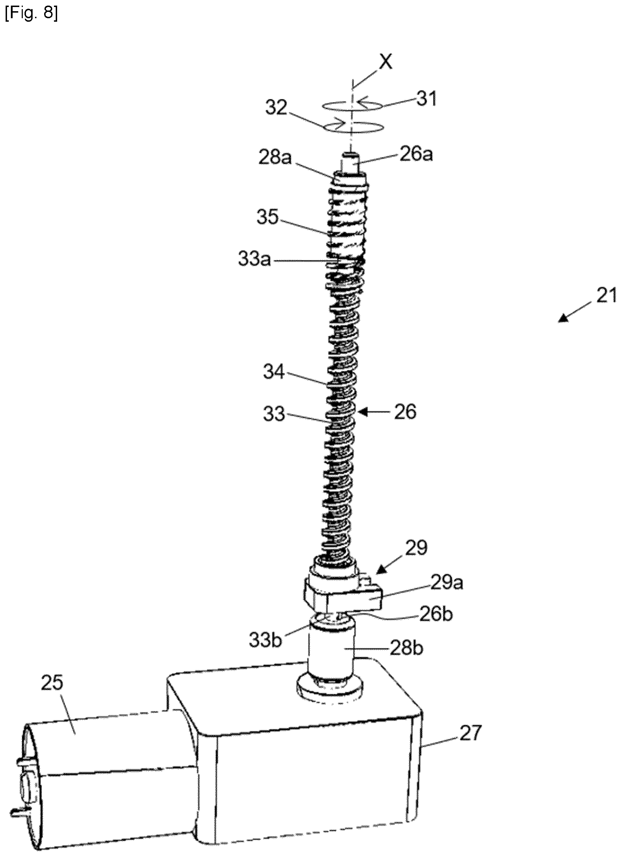

En regard notamment des figures 7, 8 et 12, un ressort 35 est monté sur la portion d'extrémité supérieure 26a de la vis 26, au-dessus de l'écrou 29, et prend appui sur le palier de roulement supérieur 28a. Lorsque le ressort 35 est à l'état de repos tel qu'illustré en figure 8, celui-ci recouvre la portion d'extrémité supérieure 33a de la tige filetée 33. Lorsque l'écrou 29 est débrayé de la tige filetée 33 et disposé dans sa portion d'extrémité supérieure 33a, dans la position haute (figure 7), le ressort 35 est compressé, et exerce de ce fait une poussée vers le bas sur l'écrou 29, ce qui force le taraudage dudit écrou 29 à réembrayer avec l'extrémité supérieure 34a du filet 34 de la tige filetée 33 lors d'une inversion du sens de rotation de la vis 26 qui se met alors à tourner dans le sens de la flèche 31, permettant ainsi à l'écrou 29 de redescendre. Inversement, lorsque l'écrou 29 est débrayé de la tige filetée 33 et disposé dans sa portion d'extrémité inférieure 33b, dans la position basse (figure 8), le système mécanique de rappel 22 (détaillé ci-après) agit sur le panier 17 pour forcer son retour en position basse d'infusion, ce qui permet au lien 20 d'exercer une traction vers le haut sur l'écrou 29 et, ainsi, de forcer le taraudage dudit écrou 29 à réembrayer avec l'extrémité inférieure 34b du filet 34 de la tige filetée 33 lors d'une inversion du sens de rotation de la vis 26 qui se met alors à tourner dans le sens de la flèche 32, permettant ainsi à l'écrou 29 de remonter.

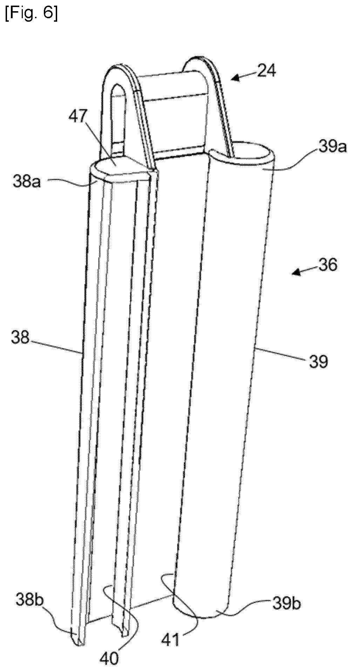

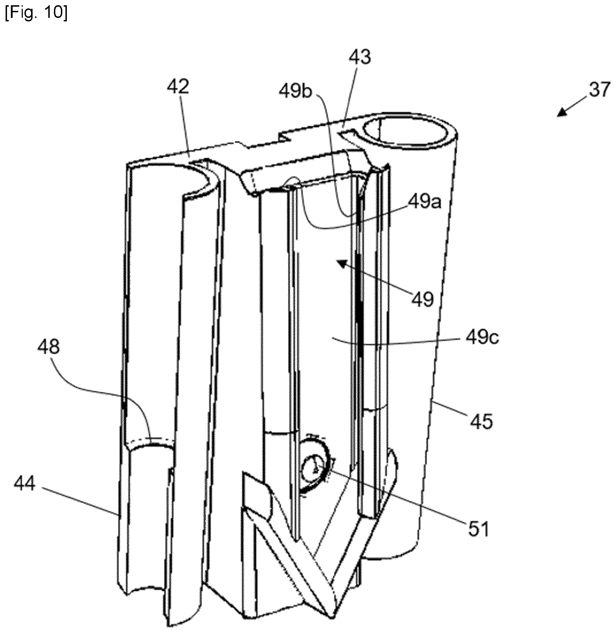

En regard des figures 4 à 6 et 9 à 10, le système mécanique de rappel 22 comprend une colonne de guidage 36 (illustrée plus en détail en figure 6) qui s'étend longitudinalement sur la paroi périphérique 4 du corps 2 à l'intérieur de la chambre 3, à proximité de la vis 26 logée dans la poignée 16. Cette colonne de guidage 36 reçoit en liaison glissière un chariot 37 (illustré plus en détail en figures 9 et 10) qui peut se déplacer selon une trajectoire définie par la longueur de ladite colonne de guidage 36. La colonne de guidage 36 comporte deux tubes 38, 39 munis chacun d'une fente 40, 41 longitudinale, ces fentes 40, 41 permettant le passage de deux parties plates 42, 43 agencées sur le chariot 37, lesdits tubes 38, 39 réceptionnant deux parties tubulaires 44, 45 du chariot 37. Les tubes 38, 39 sont fermés à leurs extrémités supérieures 38a, 39a et ils sont ouverts à leurs extrémités inférieures 38b, 39b pour permettre l'introduction du chariot 37 dans la colonne de guidage 36. Un ressort 46 (illustré en figures 4 et 5) est logé dans le tube 38 de la colonne de guidage 36 et la partie tubulaire 44 du chariot 37, ledit ressort 46 étant monté en compression entre un fond 47 sur l'extrémité supérieure 38a dudit tube 38 et un épaulement interne 48 sur la partie tubulaire 44 du chariot 37, ce qui tend à pousser vers le bas le chariot 37 pour assurer le rappel du panier 17 vers la position basse d'infusion illustrée en figure 4. Un tel ressort 46 peut être mis en œuvre entre le second tube 39 de la colonne de guidage 36 et la seconde partie tubulaire 45 du chariot 37, afin d'équilibrer les efforts et d'assurer une translation convenable du chariot 37 le long de la colonne de guidage 36.

En regard des figures 2 à 5 et 9, la première extrémité 20d du lien 20 est disposée dans la chambre 3 du corps 2 et reliée au chariot 37 du système mécanique de rappel 22 et la seconde extrémité 20e du lien 20 est disposée dans la poignée 16 et reliée à l'écrou 29 du système motorisé d'entraînement 21. Lorsque le panier 17 est en position haute d'égouttage, illustrée en figure 5, l'écrou 29 est débrayé sur la portion d'extrémité inférieure 33b de la tige filetée 33 de la vis 26 tel qu'expliqué précédemment et le ressort 46 dans la colonne de guidage 36 est en compression maximale, celui-ci tendant à pousser le chariot 37 vers le bas. Cette poussée vers le bas exercée sur le chariot 37 permet au lien 20 de tirer vers le haut l'écrou 29, ce qui permet audit écrou 29 de réembrayer avec la tige filetée 33 de la vis 26 lorsque celle-ci commence à tourner dans le sens de la flèche 32. Une fois l'écrou 29 réembrayé, celui-ci se déplace vers le haut sur la vis 26 qui continue à tourner dans le sens de la flèche 32, ce qui permet la remontée de la seconde extrémité 20e du lien 20 et donne du mou audit lien 20, permettant ainsi au ressort 46 de descendre le chariot 37 assujetti au panier 17 jusqu'à atteindre la position basse d'infusion, illustrée en figure 4, selon laquelle l'écrou 29 débraye de la portion d'extrémité supérieure 33a de la tige filetée 33 de la vis 26, tel qu'expliqué précédemment. Tel qu'expliqué précédemment, le ressort 35 sur la vis 26 permet à l'écrou 29 de réembrayer avec la tige filetée 33 de ladite vis 26 lorsque celle-ci commence à tourner en sens inverse dans le sens de la flèche 31. Une fois l'écrou 29 réembrayé, celui-ci se déplace vers le bas sur la vis 26 qui continue à tourner dans le sens de la flèche 31, ce qui permet audit écrou 29 de tirer sur le lien 20 relié au chariot 37 qui remonte alors sur la colonne de guidage 36 jusqu'à ce que le panier 17 arrive en position haute d'égouttage, illustrée en figure 5, selon laquelle l'écrou 29 débraye à nouveau de la portion d'extrémité inférieure 33b de la tige filetée 33.

Le circuit de commande 11 dans le boîtier 9 de l'appareil 1 est programmé pour actionner le moteur 25 pendant une durée T2 supérieure à la durée T1 nécessaire pour déplacer le panier 17 de la position haute d'égouttage à la position basse d'infusion, ou inversement, de manière à garantir une course totale de l'écrou 29 entre les positions basse et haute sur la vis 26 malgré les cas où ledit écrou 29 met un laps de temps à réembrayer sur la vis 26 lors d'un changement du sens de rotation de celle-ci. Ce circuit de commande 11 peut aussi être programmé pour faire tourner le moteur 25 pendant une durée T3, inférieure à la durée T1, afin d'entraîner la rotation de la vis 26 dans le sens de la flèche 31 lorsque l'écrou 29 est en position haute illustrée en figure 8, correspondant à une position basse d'infusion du panier 17, ce qui permet de descendre en partie l'écrou 29 sur la vis d'entraînement 26 et ainsi de remonter partiellement le panier 17 dans la chambre 3 du corps 2 en le conservant dans l'eau chaude, puis pour faire tourner le moteur 25 en sens inverse pendant une durée T4, supérieure à la durée T3, afin d'entraîner la rotation de la vis 26 dans le sens de la flèche 32 permettant de garantir un retour de l'écrou 29 dans ladite position haute en sorte de redescendre le panier 17 dans ladite position basse d'infusion. Cela permet de créer une agitation du panier 17 dans l'eau chaude contenue dans la chambre 3, durant l'infusion.

En regard des figures 9 à 11, le panier 17 est monté de manière amovible sur le chariot 37 de sorte à permettre l'extraction du panier 17 hors du corps 2 de l'appareil 1 afin d'insérer de la substance à infuser dans le panier 17 ou, au contraire, de retirer la substance infusée dudit panier 17 et nettoyer ce dernier. Le chariot 37 comporte une glissière 49 munie de deux rainures longitudinales 49a, 49b et le panier 17 comporte une pièce 50 en forme de T munie de deux parties latérales 50a, 50b qui s'engagent dans lesdites rainures longitudinales 49a, 49b. Le chariot 37 comprend un plot 51 agencé de manière escamotable dans le fond 49c de la glissière 49, le plot 51 étant monté en rappel sur ressort (non illustré) de sorte à revenir dans la position sortie illustrée en figure 10. La pièce 50 comprend un orifice 52 sur sa face plane 50c, laquelle est attenante au fond 49c de la glissière 49 lorsque ladite pièce 50 est engagée dans celle-ci, position illustrée en figure 9 selon laquelle le plot 51 est encliqueté dans l'orifice 52. Le plot 51 s'escamote dans le fond 49c de la glissière 49 lorsqu'un effort suffisant est exercé sur le panier 17 en tirant dessus pour son retrait du chariot 37 ou en poussant dessus pour sa mise en place sur le chariot 37.

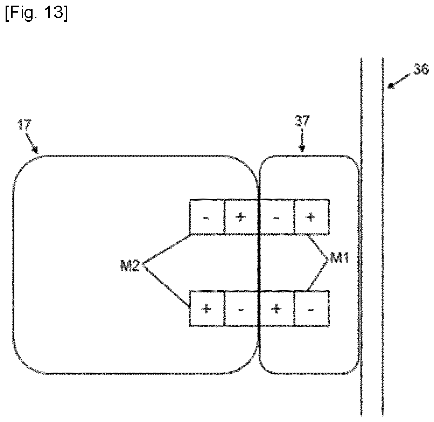

D'autres dispositifs d'assemblage peuvent être envisagés pour monter le panier 17 de manière amovible sur le chariot 37. A titre d'exemple, illustré en figure 13, le chariot 37 peut comporter une première paire d'aimants M1 et le panier 17 peut comporter une seconde paire d'aimants M2, lesdites paires d'aimants M1, M2 ayant des polarités inversées de sorte à assurer une attraction magnétique entre le chariot 37 et le panier 17. La polarité des deux aimants sur chaque paire d'aimants M1, M2 pourra aussi être inversée comme l'illustre cette figure 13 afin de permettre un assemblage du panier 17 sur le chariot 37 selon une position unique. D'autres moyens d'attraction magnétique sont envisageables entre le chariot 37 et le panier 17.

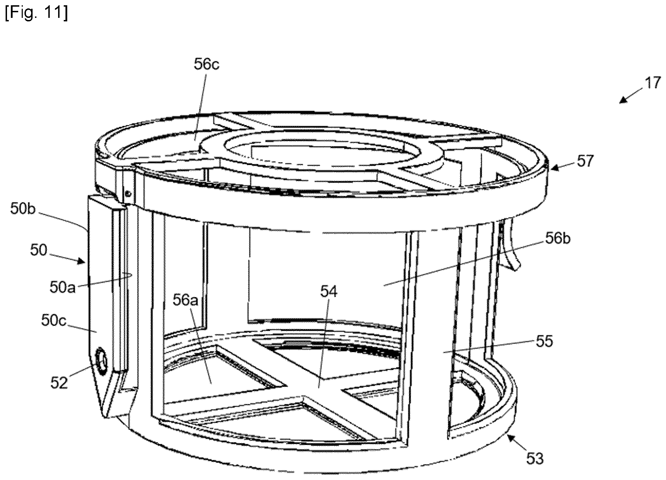

Tel qu'illustré en figure 11, le panier 17 comprend un contenant 53 muni d'un fond 54 et d'un contour 55 sur lesquels sont définies des fenêtres 56a, 56b. Le panier 17 comprend aussi un couvercle 57 fermant le contenant 53, sur lequel sont également définies des fenêtres 56c. Bien entendu, le contenant 53 et le couvercle 57 sont revêtus d'une paroi filtrante (non illustrée) permettant de contenir la substance à infuser ou infusée dans le panier 17 et de laisser passer l'eau chaude infusée ou non durant ladite infusion et durant l'égouttage du panier 17.

Des variantes de l'appareil 1 sont envisageables dans le cadre de l'invention.

## Revendications

1. Appareil (1) de préparation de boissons infusées comprenant un corps (2) destiné à recevoir de l'eau et un panier à infusion (17), ledit appareil comprenant un dispositif de déplacement (19) du panier à infusion dans le corps entre une position basse d'infusion dans laquelle le panier à infusion est immergé dans l'eau et une position haute d'égouttage dans laquelle le panier à infusion est positionné au-dessus du niveau d'eau, ledit dispositif de déplacement comportant un élément de transmission flexible (20) qui passe par une ouverture supérieure (6) du corps (2) et qui comprend une première extrémité (20d) reliée au panier à infusion (17) et une deuxième extrémité (20e) agencée à l'extérieur du corps (2), **caractérisé en ce que** le dispositif de déplacement (19) comporte un système motorisé d'entrainement (21) de la deuxième extrémité (20e) et un système mécanique de rappel (22) du panier à infusion (17) en position basse d'infusion pour mettre en tension l'élément de transmission flexible (20).

2. Appareil (1) selon la revendication 1, dans lequel le système mécanique de rappel (22) du panier à infusion (17) en position basse d'infusion comporte au moins un ressort (46).

3. Appareil (1) selon la revendication 2, dans lequel le système mécanique de rappel (22) du panier à infusion (17) en position basse d'infusion comporte au moins une colonne de guidage (36) en translation dudit panier à infusion, l'au moins une colonne de guidage comportant un logement de réception de l'au moins un ressort (46).

4. Appareil (1) selon la revendication 3, dans lequel la première extrémité (20d) de l'élément de transmission flexible (20) est attachée à un chariot (37) qui coopère avec l'au moins une colonne de guidage (36), le panier à infusion (17) étant agencé sur le chariot.

5. Appareil (1) selon la revendication 4, dans lequel le panier à infusion (17) est agencé de manière démontable sur le chariot (37).

6. Appareil (1) selon l'une quelconque des revendications 1 à 5, dans lequel le corps (2) comporte une paroi périphérique (4) munie d'une poignée (16) et le système motorisé d'entrainement (21) de la deuxième extrémité (20e) de l'élément de transmission flexible (20) est agencé dans ladite poignée.

7. Appareil (1) selon l'une quelconque des revendications 1 à 6, dans lequel le système motorisé d'entraînement (21) comporte une vis (26) entrainée en rotation par un moteur (25) et un écrou (29) monté sur la vis, la deuxième extrémité (20e) de l'élément de transmission flexible (20) étant reliée à l'écrou.

8. Appareil (1) selon l'une quelconque des revendications 1 à 7, dans lequel l'élément de transmission flexible (20) est du type ruban et présente une section rectangulaire aplatie.

9. Appareil (1) selon la revendication 8, dans lequel l'élément de transmission flexible (20) est réalisé en une matière plastique.

10. Appareil (1) selon l'une quelconque des revendications 1 à 9, dans lequel le dispositif de déplacement (19) comporte une pièce de guidage (24) de l'élément de transmission flexible (20) agencée sur un bord supérieur (4c) du corps (2).

11. Appareil (1) selon l'une quelconque des revendications 1 à 10, lequel comporte des moyens de chauffe (8, 10) de l'eau contenue dans le corps (2) et un circuit de commande (11) des moyens de chauffe et du système motorisé d'entrainement (21) de la deuxième extrémité (20e) de l'élément de transmission flexible (20).

## Patentansprüche

1. Einrichtung (1) zur Zubereitung von Aufgussgetränken, einen Körper (2) umfassend, der dazu bestimmt ist, Wasser und einen Aufgusskorb (17) aufzunehmen, wobei die Einrichtung eine Verschiebevorrichtung (19) des Aufgusskorbes in dem Körper zwischen einer unteren Aufgussposition, in der der Aufgusskorb in das Wasser eingetaucht ist, und einer oberen Abtropfposition umfasst, in der der Aufgusskorb oberhalb des Wasserpegels positioniert ist, wobei die Verschiebevorrichtung ein flexibles Übertragungselement (20) beinhaltet, das durch eine obere Öffnung (6) des Körpers (2) verläuft und das ein erstes Ende (20d) umfasst, das mit dem Aufgusskorb (17) verbunden ist, und ein zweites Ende (20e), das außerhalb des Körpers (2) angeordnet ist, **dadurch gekennzeichnet, dass** die Verschiebevorrichtung (19) ein motorisiertes Antriebssystem (21) des zweiten Endes (20e) und ein mechanisches Rückstellsystem (22) des Aufgusskorbes (17) in die untere Aufgussposition beinhaltet, um das flexible Übertragungselement (20) in Spannung zu versetzen.

2. Einrichtung (1) nach Anspruch 1, wobei das mechanische Rückstellsystem (22) des Aufgusskorbes (17) in unterer Aufgussposition mindestens eine Feder (46) umfasst.

3. Einrichtung (1) nach Anspruch 2, wobei das mechanische Rückstellsystem (22) des Aufgusskorbes (17) in unterer Aufgussposition mindestens eine Translationsführungssäule (36) des Aufgusskorbes umfasst, wobei die mindestens eine Führungssäule eine Einhausung zur Aufnahme der mindestens einen Feder (46) umfasst.

4. Einrichtung (1) nach Anspruch 3, wobei das erste Ende (20d) des flexiblen Übertragungselements (20) an einem Schlitten (37) befestigt ist, der mit der mindestens einen Führungssäule (36) zusammenwirkt, wobei der Aufgusskorb (17) auf dem Schlitten angeordnet ist.

5. Einrichtung (1) nach Anspruch 4, wobei der Aufgusskorb (17) demontierbar an dem Schlitten (37) angeordnet ist.

6. Einrichtung (1) nach einem der Ansprüche 1 bis 5, wobei der Körper (2) eine umlaufende Wand (4) umfasst, die mit einem Griff (16) versehen ist, und das motorisierte Antriebssystem (21) des zweiten Endes (20e) des flexiblen Übertragungselements (20) in dem Griff angeordnet ist.

7. Einrichtung (1) nach einem der Ansprüche 1 bis 6, wobei das motorisierte Antriebssystem (21) eine Schraube (26) umfasst, die durch einen Motor (25) in Drehung angetrieben wird, und eine Mutter (29), die auf der Schraube angebracht ist, wobei das zweite Ende (20e) des flexiblen Übertragungselements (20) mit der Mutter verbunden ist.

8. Einrichtung (1) nach einem der Ansprüche 1 bis 7, wobei das flexible Übertragungselement (20) vom Typ Band ist, und einen abgeflachten rechteckigen Querschnitt aufweist.

9. Einrichtung (1) nach Anspruch 8, wobei das flexible Übertragungselement (20) aus einem Kunststoffmaterial gefertigt ist.

10. Einrichtung (1) nach einem der Ansprüche 1 bis 9, wobei die Verschiebevorrichtung (19) ein Führungsteil (24) des flexiblen Übertragungselements (20) umfasst, das an einem oberen Rand (4c) des Körpers (2) angeordnet ist.

11. Einrichtung (1) nach einem der Ansprüche 1 bis 10, welches Mittel zum Aufheizen (8, 10) des in dem Körper (2) enthaltenen Wassers und einen Steuerkreis (11) der Mittel zum Aufheizen und des motorisierten Antriebssystems (21) des zweiten Endes (20e) des flexiblen Übertragungselements (20) umfasst.

## Claims

1. Appliance (1) for preparing brewed beverages comprising a body (2) intended to receive water and a brewing basket (17), said appliance comprising a device for moving (19) the brewing basket in the body between a lower brewing position wherein the brewing basket is immersed in the water and an upper draining position wherein the brewing basket is positioned above the water level, said device for moving comprising a flexible transmission element (20) that passes through an upper opening (6) of the body (2) and that comprises a first end (20d) connected to the brewing basket (17) and a second end (20e) arranged outside the body (2), **characterised in that** the device for moving (19) comprises a motorised system for driving (21) the second end (20e) and a mechanical system for returning (22) the brewing basket (17) to the lower brewing position in order to tension the flexible transmission element (20).

2. Appliance (1) according to claim 1, wherein the mechanical system for returning (22) the brewing basket (17) to the lower brewing position comprises at least one spring (46).

3. Appliance (1) according to claim 2, wherein the mechanical system for returning (22) the brewing basket (17) to the lower brewing position comprises at least one guide column (36) in translation of said brewing basket, the at least one guide column comprising a housing for receiving the at least one spring (46).

4. Appliance (1) according to claim 3, wherein the first end (20d) of the flexible transmission element (20) is attached to a carriage (37) that cooperates with the at least one guide column (36), the brewing basket (17) being arranged on the carriage.

5. Appliance (1) according to claim 4, wherein the brewing basket (17) is removably arranged on the carriage (37).

6. Appliance (1) according to any of claims 1 to 5, wherein the body (2) comprises a peripheral wall (4) provided with a handle (16) and the motorised system for driving (21) the second end (20e) of the flexible transmission element (20) is arranged in said handle.

7. Appliance (1) according to any of claims 1 to 6, wherein the motorised system for driving (21) comprises a screw (26) driven in rotation by a motor (25) and a nut (29) mounted on the screw, the second end (20e) of the flexible transmission element (20) being connected to the nut.

8. Appliance (1) according to any of claims 1 to 7, wherein the flexible transmission element (20) is of the ribbon type and has a flattened rectangular section.

9. Appliance (1) according to claim 8, wherein the flexible transmission element (20) is made from a plastic material.

10. Appliance (1) according to any of claims 1 to 9, wherein the device for moving (19) comprises a guide part (24) of the flexible transmission element (20) arranged on an upper edge (4c) of the body (2).

11. Appliance (1) according to any of claims 1 to 10, that comprises means for heating (8, 10) water contained in the body (2) and a circuit for controlling (11) the means for heating and the motorised system for driving (21) the second end (20e) of the flexible transmission element (20).
